# EUROPEAN PATENT APPLICATION

(11) **EP 4 660 786 A1**
(43) Date of publication of application: **10.12.2025**
(21) Application number: 25180356.5
(22) Date of filing: 03.06.2025
(51) Int. Cl.: G06F 8/38, G06F 9/451, G06F 40/30, G06N 20/00

(54) **SEMANTIC TARGET IDENTIFICATION FOR USER INTERFACE (UI) AUTOMATION**

(30) Priority: 03.06.2024 US 202418731727
(71) Applicant: UiPath, Inc., New York NY 10017 (US)
(72) Inventor: STAN, Gheorghe C., New York, 10017 (US); MIRON, Ion, New York, 10017 (US)
(74) Representative: Ungria López, Javier

(57) **Abstract**

Some embodiments automatically identify a target of a robotic process automation (RPA) activity (e.g., a button to click, an input field to fill out) according to a semantic similarity between a design-time label of the target and a label of a target candidate selected from a runtime instance of the target UI. Semantic similarity herein denotes likeness of meaning, as opposed to wording. Some embodiments employ a language model (LM) to quantify semantic similarity.

## Description

### BACKGROUND OF THE INVENTION

The invention relates to robotic process automation (RPA), and in particular to improving target identification in user interface (UI) automation.

RPA is an emerging field of information technology aimed at improving productivity by automating repetitive computing tasks, thus freeing human operators to perform more intellectually sophisticated and/or creative activities. Notable tasks targeted for automation include extracting structured data from documents and web pages and interacting with user interfaces, for instance filling forms and manipulating spreadsheets, among others.

Automating interactions with a user interface poses specific technical problems, such as unambiguously identifying the target of a robotic activity (e.g., a specific button to click, a specific form field to fill in, etc.). When designing an RPA workflow, a target Ul element may be specified via a set of programmatic and/or visual characteristics of the respective element. Programmatic characteristics may include, for instance, a set of attribute-value pairs characterizing the position of the respective element within a programmatic representation of the respective UI, such as a UI tree or document object model (DOM). Exemplary visual characteristics may include a position of the respective element relative to other elements of the UI, a color, and a label of the respective element.

However, the target UI (e.g., an e-commerce webpage, an accounting interface, etc.) is typically developed and maintained independently of the RPA robot tasked with interacting with the respective interface. Consequently, the functionality and/or appearance of the target UI may change without the knowledge of RPA developers. Various UI elements may be moved around, renamed and/or resized, the color scheme of the UI may change, etc. Following such changes, the RPA robot may fail to identify the activity target, since it no longer has the expected characteristics.

Therefore, there is a strong interest in developing robust methods of identifying an RPA activity target, methods which are relatively insensitive to variations in the design of the target UI.

### SUMMARY OF THE INVENTION

According to one aspect, a computer system comprises at least one hardware processor configured to receive an encoding of a robotic process automation (RPA) activity and an encoding of a design-time target label, wherein the RPA activity mimics a human interaction with a target element of a user interface (UI), and wherein the design-time target label comprises a text label attached to the target element within a design-time instance of the UI. The at least one hardware processor is further configured to identify a runtime instance of the target element within a runtime instance of the UI exposed by the computer system and in response, to execute the RPA activity on the runtime instance of the target element. The runtime instance of the target element is identified according to a similarity between a meaning of the design-time target label and a meaning of a label attached to the runtime instance of the target element.

According to another aspect, a computer-implemented RPA method comprises employing at least one hardware processor of a computer system to receive an encoding of an RPA activity and an encoding of a design-time target label, wherein the RPA activity mimics a human interaction with a target element of a UI, and wherein the design-time target label comprises a text label attached to the target element within a design-time instance of the UI. The method further comprises employing the at least one hardware processor to identify a runtime instance of the target element within a runtime instance of the UI exposed by the computer system and in response, to execute the RPA activity on the runtime instance of the target element. The runtime instance of the target element is identified according to a similarity between a meaning of the design-time target label and a meaning of a label attached to the runtime instance of the target element.

According to yet another aspect, a non-transitory computer-readable medium stores instructions which, when executed by at least one hardware processor of a computer system, cause the computer system to receive an encoding of an RPA activity and an encoding of a design-time target label, wherein the RPA activity mimics a human interaction with a target element of a UI, and wherein the design-time target label comprises a text label attached to the target element within a design-time instance of the UI. The instructions further cause the computer system to identify a runtime instance of the target element within a runtime instance of the UI exposed by the computer system and in response, to execute the RPA activity on the runtime instance of the target element. The runtime instance of the target element is identified according to a similarity between a meaning of the design-time target label and a meaning of a label attached to the runtime instance of the target element.

### BRIEF DESCRIPTION OF DRAWINGS

The foregoing aspects and advantages of the present invention will become better understood upon reading the following detailed description and upon reference to the drawings where:
Fig. **1** shows an architectural diagram of a hyper-automation system according to some embodiments of the present invention.
Fig. **2** illustrates an exemplary RPA system according to some embodiments of the present invention.
Fig. **3** shows an exemplary deployed RPA system executing in a client-server configuration according to some embodiments of the present invention.
Fig. **4** shows an exemplary user interface (UI) and exemplary UI elements targeted by automations according to some embodiments of the present invention.
Fig. **5** shows exemplary design-time and runtime target user interfaces according to some embodiments of the present invention.
Fig. **6** shows an exemplary data exchange according to some embodiments of the present invention.
Fig. **7** shows an exemplary sequence of steps performed by an RPA design application according to some embodiments of the present invention.
Fig. **8** shows an exemplary RPA design interface according to some embodiments of the present invention.
Fig. **9** illustrates an exemplary semantic target selection interface exposed by the RPA design application according to some embodiments of the present invention.
Fig. **10** shows an exemplary sequence of steps performed by an RPA robot at runtime, according to some embodiments of the present invention.
Fig. **11** illustrates exemplary components of a label similarity query according to some embodiments of the present invention.
Fig. **12** shows an exemplary similarity indicator associated with a respective label similarity query according to some embodiments of the present invention.
Fig. **13** shows exemplary components of a semantic assessor module according to some embodiments of the present invention.
Fig. **14** illustrates the operation of an exemplary generative language model (GLM) according to some embodiments of the present invention.
Fig. **15** shows an exemplary structure of a GLM according to some embodiments of the present invention.
Fig. **16** shows an exemplary similarity measure *d* quantifying a semantic similarity between two character strings according to some embodiments of the present invention.
Fig. **17** shows an exemplary hardware configuration of a computer system programmed to execute some of the methods described herein.

### DETAILED DESCRIPTION OF THE INVENTION

In the following description, it is understood that all recited connections between structures can be direct operative connections or indirect operative connections through intermediary structures. A set of elements includes one or more elements. Any recitation of an element is understood to refer to at least one element. A plurality of elements includes at least two elements. Any use of 'or' is meant as a nonexclusive or. Unless otherwise required, any described method steps need not be necessarily performed in a particular illustrated order. A first element (e.g., data) derived from a second element encompasses a first element equal to the second element, as well as a first element generated by processing the second element and optionally other data. Making a determination or decision according to a parameter encompasses making the determination or decision according to the parameter and optionally according to other data. Unless otherwise specified, an indicator of some quantity/data may be the quantity/data itself, or an indicator different from the quantity/data itself. A computer program is a sequence of processor instructions carrying out a task. Computer programs described in some embodiments of the present invention may be stand-alone software entities or sub-entities (e.g., subroutines, libraries) of other computer programs. The term 'database' is used herein to denote any organized, searchable collection of data. Semantic similarity herein denotes likeness of meaning, as opposed to likeness of wording. Stated otherwise, two text samples may be semantically similar even if they are phrased differently. Basic examples are synonyms and semantically-related words such as 'car' and 'vehicle'. Conversely, two text samples may differ only slightly in wording, yet be semantically dissimilar (carry different meanings), as in the exemplary sentences 'I will go through with the ceremony' and 'I will go through the ceremony plans'. Computer-readable media encompass non-transitory media such as magnetic, optic, and semiconductor storage media (e.g. hard drives, optical disks, flash memory, DRAM), as well as communication links such as conductive cables and fiber optic links. According to some embodiments, the present invention provides, *inter alia,* computer systems comprising hardware (e.g. one or more processors) programmed to perform the methods described herein, as well as computer-readable media encoding instructions to perform the methods described herein.

The following description illustrates embodiments of the invention by way of example and not necessarily by way of limitation.

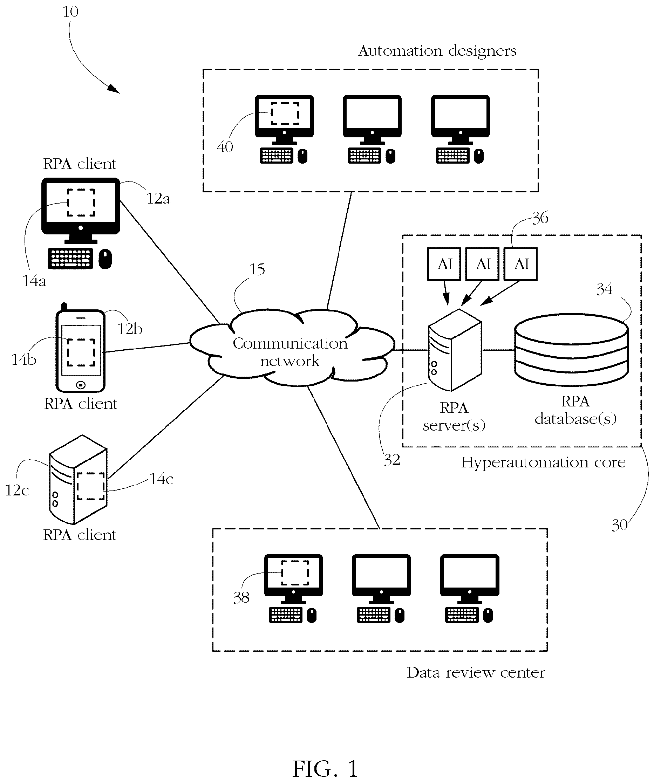

Fig. **1** is an architectural diagram illustrating a hyper-automation system **10** according to some embodiments of the present invention. 'Hyper-automation' as used herein refers to automation systems that bring together components of robotic process automation, integration tools, and technologies that amplify the ability to automate work. In an exemplary robotic process automation scenario, an employee of a company uses a business application (e.g., word processor, spreadsheet editor, browser, email application) to perform a repetitive task, for instance to issue invoices to various clients. To carry out the respective task, the employee performs a sequence of operations/actions, which is herein deemed a *work process.* Exemplary operations forming a part of an invoice-issuing work process may include opening a Microsoft Excel^{®} spreadsheet, looking up company details of a client, copying the respective details into an invoice template, filling out invoice fields indicating the purchased items, switching over to an email application, composing an email message to the respective client, attaching the newly created invoice to the respective email message, and clicking a 'Send' button. Various elements of system 10 may collaborate to automate the respective work process by mimicking the set of operations performed by the respective human operator in the course of carrying out the respective task. Mimicking a human operation/action is herein understood to encompass reproducing the sequence of computing events that occur when a human operator performs the respective operation/action on the computer, as well as reproducing a result of the human operator's performing the respective operation on the computer. For instance, mimicking an action of clicking a button of a graphical user interface (GUI) may comprise having the operating system move the mouse pointer to the respective button and generating a mouse click event, or may alternatively comprise toggling the respective GUI button itself to a clicked state.

Exemplary processes targeted for RPA include processing of payments, invoicing, communicating with business clients (e.g., distribution of newsletters and/or product offerings), internal communication (e.g., memos, scheduling of meetings and/or tasks), auditing, and payroll processing, among others.

RPA may constitute the core of hyper-automation system **10,** and in certain embodiments, automation capabilities may be expanded with artificial intelligence (AI) / machine learning (ML), process mining, analytics, and/or other advanced tools. As hyper-automation system **10** learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

Exemplary hyper-automation system **10** includes RPA client computing systems **12a-c,** such as a desktop computer, server computer, and smart phone, among others. Any desired client computing system may be used without deviating from the scope of the invention including, but not limited to, smart watches, laptop computers, tablet computers, Internet-of-Things (IoT) devices, etc. Also, while Fig. **1** shows only three client computing systems **12a-c,** any suitable number of client computing systems may be used without deviating from the scope of the invention. For instance, in some embodiments, dozens, hundreds, thousands, or millions of RPA clients may be used. RPA clients **12a-c** may be actively operated by a user or run automatically without much or any user input.

Each illustrated RPA client computing system **12a-c** has respective automation module(s) **14a-c** running thereon. Exemplary automation module(s) **14a-c** may include, but are not limited to, RPA robots, parts of an operating system, downloadable application(s) for the respective computing system, any other suitable software and/or hardware, or any combination of these without deviating from the scope of the invention.

In some embodiments, one or more of module(s) **14a-c** may be listeners. Listeners monitor and record data pertaining to user interactions with respective computing systems and/or operations of unattended computing systems and send the data to a hyper-automation core system **30** via a communication network **15** (e.g., a local area network - LAN, a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from such listener processes may be sent periodically as part of a heartbeat message, or in response to a fulfillment of a data accumulation condition. One or more RPA servers **32** receive and store data from the listeners in a database, such as RPA database(s) **34** in Fig. **1****.**

Other exemplary automation module(s) **14a-c** may execute the logic that actually implements the automation of a selected process. Stated otherwise, at least one automation module **14a-c** may comprise a part of an RPA robot as further described below. Robots may be attended (i.e., requiring human intervention) or unattended. In some embodiments, multiple modules **14a-c** or computing systems may participate in executing the logic of an automation. Some automations may orchestrate multiple modules **14a-c,** may carry out various background processes and/or may perform Application Programming Interface (API) calls. Some robotic activities may cause a module **14a-c** to wait for a selected task to be completed (possibly by another entity or automation module) before resuming the current workflow.

In some embodiments, hyper-automation core system **30** may run a conductor application on one or more server computer systems, such as RPA server(s) **32.** While Fig. **1** shows only one RPA server **32,** multiple or many servers that are proximate to one another or in a distributed architecture may be employed without deviating from the scope of the invention. For instance, one or more of RPA server(s) **32** may be provided for conductor functionality, Al/ML model serving, authentication, governance, and or any other suitable functionality without deviating from the scope of the invention. In some embodiments, hyper-automation core system **30** may incorporate or be part of a public cloud architecture, a private cloud architecture, a hybrid cloud architecture, etc. In certain embodiments, hyper-automation core system **30** may host multiple software-based servers on one or more computing systems, such as RPA server(s) **32.** In some embodiments, one or more servers of core hyper-automation system **30,** such as RPA server(s) **32,** may be implemented via one or more virtual machines (VMs).

In some embodiments, one or more of automation modules **14a-c** may call one or more Al/ML models **36** deployed on or accessible by hyper-automation core **30.** Al/ML models **36** may be trained for any suitable purpose without deviating from the scope of the invention. Two or more of AI/ML models **36** may be chained in some embodiments (e.g., in series, in parallel, or a combination thereof) such that they collectively provide collaborative output(s). Exemplary Al/ML models **36** may perform or assist with computer vision (CV), image processing, segmentation, and recognition, optical character recognition (OCR), document processing and/or understanding, semantic learning and/or analysis, analytical predictions, process discovery, task mining, testing, automatic RPA workflow generation, sequence extraction, clustering detection, audio-to-text translation, any combination thereof, etc. However, any desired number and/or type(s) of AI/ML models **36** may be used without deviating from the scope of the invention. Using multiple AI/ML models **36** may allow the system to develop a global picture of what is happening on a given computing system, for example. For instance, one AI/ML model could perform OCR, another could detect buttons, another could compare sequences, etc. Patterns may be determined individually by an Al/ML model or collectively by multiple AI/ML models. In certain embodiments, one or more Al/ML models **36** are deployed locally on at least one of RPA client computing systems **12a-c.**

Hyper-automation system **10** may provide at least four main groups of functionality: (1) discovery; (2) building automations; (3) management; and (4) engagement. The discovery functionality may discover and provide automatic recommendations for different opportunities of automations of business processes. Such functionality may be implemented by one or more servers, such as RPA server **32.** The discovery functionality may include providing an automation hub, process mining, task mining, and/or task capture in some embodiments.

The automation hub (e.g., UiPath Automation Hub^{™}) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud^{™} and/or UiPath Al Center^{™}) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from RPA clients **12a-c** by listeners, for example, and processed by RPA server(s) **32.** One or more Al/ML models **36** may be employed for this purpose. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud^{™} and/or UiPath Al Center^{™}) identifies and aggregates workflows (e.g., employee workflows), and then applies Al to expose patterns and variations in day-to-day tasks, scoring such tasks for ease of automation and potential savings (e.g., time and/or cost savings). One or more Al/ML models **36** may be employed to uncover recurring task patterns in the data. Repetitive tasks that are ripe for automation may then be identified. This information may initially be provided by listener modules (e.g., automation modules **14a-c**) and analyzed on servers of hyper-automation core **30.** The findings from task mining process may be exported to process documents or to an RPA design application such as UiPath Studio^{™} to create and deploy automations more rapidly.

Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud^{™} and/or UiPath Al Center^{™}) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word^{®} documents, XAML files, and the like. Build-ready workflows may be exported directly to an RPA design application, such as UiPath Studio^{™}. Task capture may simplify the requirements gathering process for both subject matter experts explaining a process and Center of Excellence (CoE) members providing production-grade automations.

The automation building functionality of hyper-automation system **10** may be accomplished via a computer program, illustrated as an RPA design application **40** in Fig. **1****.** Examples include UiPath Studio^{™}, UiPath StudioX^{™}, or UiPath Web^{™}, among others. Such computer programs may be used to build and test automations for various applications and environments, such as web, mobile, SAP^{®}, and virtualized desktops. In some embodiments, RPA design application **40** enables a human developer to design a *workflow* that effectively automates a target work process. A workflow typically comprises a sequence of custom automation steps, herein deemed *RPA activities.* Each activity includes at least one action performed by the robot, such as clicking a button, reading a file, writing to a spreadsheet cell, etc. Activities may be nested and/or embedded. In some embodiments, RPA design application **40** exposes a design interface and set of tools that give the developer control of the execution order and the relationship between activities of a workflow. In some embodiments, predefined activities, drag-and-drop modeling, and a workflow recorder may make automation easier with minimal coding. Document understanding functionality may be provided by Al activities for data extraction and interpretation that call one or more Al/ML models **36.** Such automations may process virtually any document type and format, including tables, webpages, forms, signatures, and handwriting.

RPA design application **40** may also be used to seamlessly combine user interface (UI) automation with API automation, for example to provide API integration with various other applications, technologies, and platforms. A repository (e.g., UiPath Object Repository^{™}) or marketplace (e.g., UiPath Marketplace^{™}) for pre-built RPA and Al templates and solutions may be provided to allow developers to automate a wide variety of processes more quickly. Thus, when building automations, hyper-automation system **10** may provide user interfaces, development environments, API integration, pre-built and/or custom-built AI/ML models, development templates, integrated development environments (IDEs), and advanced Al capabilities. Hyper-automation system **10** may further enable deployment, management, configuration, monitoring, debugging, and maintenance of RPA robots for carrying out the automations designed using application **40.**

The management functionality of hyper-automation system **10** may provide deployment, orchestration, test management, Al functionality, and optimization of automations across an organization. Other exemplary aspects of management functionality include DevOps activities such as continuous integration and continuous deployment of automations. Management functionality may also act as an integration point with third-party solutions and applications for automation applications and/or RPA robots.

As an example of management functionality, a conductor application or service may facilitate provisioning, deployment, configuration, queuing, monitoring, logging, and interconnectivity of RPA robots, among others. Examples of such conductor applications/services include UiPath Orchestrator^{™} (which may be provided as part of the UiPath Automation Cloud^{™} or on premises, inside a virtual machine, or as a cloud-native single container suite via UiPath Automation Suite^{™}). A test suite of applications/services (e.g., UiPath Test Suite^{™}) may further provide test management to monitor the quality of deployed automations. The test suite may facilitate test planning and execution, meeting of requirements, and defect traceability. The test suite may include comprehensive test reporting.

Analytics software (e.g., UiPath Insights^{™}) may track, measure, and manage the performance of deployed automations. The analytics software may align automation operations with specific key performance indicators (KPIs) and strategic outcomes for an organization. The analytics software may present results in a dashboard format for better understanding by human users.

Al management functionality may be provided by an Al center (e.g., UiPath Al Center^{™}), which facilitates incorporation of AI/ML models into automations. Pre-built AI/ML models, model templates, and various deployment options may make such functionality accessible even to those who are not data scientists. Deployed automations (e.g., RPA robots) may call AI/ML models **36** from the Al center. Performance of the Al/ML models may be monitored. Models **36** may be trained and improved using human-validated data, such as that provided by a data review center as illustrated in Fig. **1****.** Human reviewers may provide labeled data (e.g., a training corpus) to hyper-automation core **30** via a review application **38** executing on a computer connected to network **15.** Reviewers may also use application **38** to validate that predictions by AI/ML models **36** are accurate, and provide corrections otherwise. This dynamic input may then be saved as training data for retraining Al/ML models **36,** and may be stored in a database such as RPA database **34,** for example. The Al center may schedule and execute training jobs to train the new versions of Al/ML models **36** using the training data.

The engagement functionality of hyper-automation system **10** engages humans and automations as one team for seamless collaboration on desired processes. Low-code applications may be built (e.g., via UiPath Apps^{™}) to connect to browser and legacy software. Applications may be created quickly using a web browser through a rich library of drag-and-drop controls, for instance. An application can be connected to a single automation or multiple automations. An action center (e.g., UiPath Action Center^{™}) may provide a mechanism to hand off processes from robots to humans, and vice versa. Humans may provide approvals or escalations, make exceptions, etc. RPA robots may then perform the automatic functionality of a given workflow.

A local assistant may be provided as a launchpad for users to launch automations (e.g., UiPath Assistant^{™}). This functionality may be provided in a tray provided by an operating system, for example, and may allow users to interact with RPA robots and RPA robot-powered applications on their computing systems. An interface may list automations/workflows approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

In another exemplary engagement functionality, Chatbots (e.g., UiPath Chatbots^{™}), social messaging applications, an/or voice commands may enable users to run automations. This may simplify access to information, tools, and resources users need to interact with customers or perform other activities. For instance, a chatbot may respond to a command formulated in a natural language by triggering a robot configured to perform operations such as checking an order status, posting data in a CRM, etc.

In some embodiments, some functionality of hyper-automation system **10** may be provided iteratively and/or recursively. Processes can be discovered, automations can be built, tested, and deployed, performance may be measured, use of the automations may readily be provided to users, feedback may be obtained, Al/ML models may be trained and retrained, and the process may repeat itself. This facilitates a more robust and effective suite of automations.

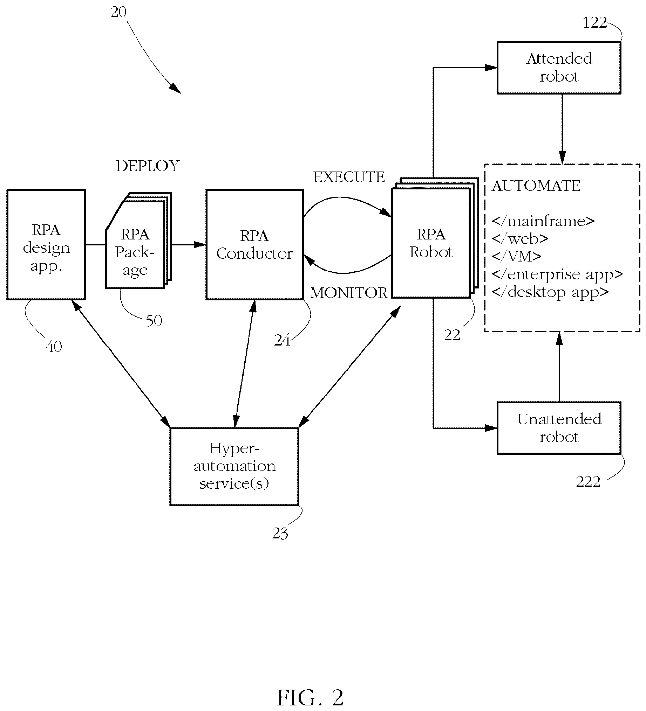

Fig. **2** illustrates exemplary components and operation of an RPA system **20** according to some embodiments of the present invention. RPA system **20** may form a part of hyper-automation system **10** of Fig**. 1****.** RPA system **20** includes an RPA design application **40** that enables a developer to build automations, i.e., design and implement RPA workflows. For instance, application **40** may expose a user interface and set of tools that give the developer control of the execution order and the relationship between activities of a workflow. One commercial example of RPA design application **40** is UiPath Studio^{™}.

Some types of RPA workflows may include, but are not limited to, sequences, flowcharts, finite state machines (FSMs), and/or global exception handlers. Sequences may be particularly suitable for linear processes, enabling flow from one activity to another without cluttering a workflow. Flowcharts may be particularly suitable to more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed, it may be encoded in computer-readable form, such as an RPA script or an RPA package **50** (Fig. 2). An RPA script comprises a specification of the respective workflow, the specification comprehensible to (or interpretable by) RPA robot **22.** RPA scripts may be formulated according to any data specification format known in the art, for instance in a version of an extensible markup language (XML), Javascript Object Notation (JSON), or a programming language such as C#, Visual Basic, Java, etc. Alternatively, RPA scripts may be formulated in an RPA-specific version of bytecode, or even as a sequence of instructions formulated in a natural language such as English, Spanish, Japanese, etc. In some embodiments, one or more related RPA scripts are bundled together with other files and/or metadata, to form RPA package **50.** For instance, beside RPA scripts, RPA package **50** may comprise a specification of a resource required for executing the respective workflow(s). Exemplary resources include a location of a file (e.g., path, URL), a filename, and a set of credentials for accessing a particular machine, computer program, or service, among others. In what is commonly known in the art as a 'build', RPA scripts may be pre-compiled into a set of executable files which may include a main executable and accompanying libraries, resource specifications and metadata, to form RPA package **50.** Package **50** may use any data specification format known in the art. For instance, some embodiments of package **50** comprise a NuGet package of .NET assembly files.

A skilled artisan will appreciate that RPA design application **40** may comprise multiple components/modules, which may execute on distinct physical machines. In one such example illustrating a cloud computing embodiment of the present invention, RPA design application **40** may execute in a client-server configuration, wherein one component of application **40** may expose an automation design interface on the developer's computer, and another component of application **40** executing on a remote server may assemble the workflow and formulate/output RPA package **50.** For instance, a developer may access the automation design interface via a web browser executing on the developer's computer, while the software processing the user input received at the developer's computer actually executes on the server.

In some embodiments, a workflow designed in RPA design application **40** is deployed to an RPA conductor **24,** for instance in the form of an RPA package as described above. Per the above, in some embodiments, conductor **24** may be part of hyper-automation core system **30** illustrated in Fig. **1****.** One commercial example of conductor **24** is UiPath Orchestrator^{™}.

Conductor **24** orchestrates one or more RPA robots **22** that execute the respective workflow. Such 'orchestration' may include creating, monitoring, and deploying computing resources for robots **22** in an environment such as a cloud computing system and/or a local computer. Orchestration may further comprise, among others, deployment, configuration, queueing, monitoring, logging of robots **22,** and/or providing interconnectivity for robots **22.** Provisioning may include creating and maintaining connections between robots **22** and conductor **24.** Deployment may include ensuring the correct delivery of software (e.g, RPA packages **50,** individual workflow specifications) to robots **22** for execution. Configuration may include maintenance and delivery of robot environments and workflow configurations. Queueing may include providing management of job queues and queue items. Monitoring may include keeping track of robot state and maintaining user permissions. Logging may include storing and indexing logs to a database and/or another storage mechanism (e.g., SQL, ElasticSearch^{®}, Redis^{®}). Conductor **24** may further act as a centralized point of communication for third-party solutions and/or applications. In some embodiments as further described below, conductor **24** may further provide automation troubleshooting services and assistance.

RPA robots **22** are execution agents (e.g., computer programs) that implement automation workflows targeting various systems and applications including, but not limited to, mainframes, web applications, virtual machines, enterprise applications (e.g., those produced by SAP^{®}, SalesForce^{®}, Oracle^{®}, etc.), desktop and laptop applications, mobile device applications, wearable computer applications, etc. One commercial example of robot **22** is UiPath Robots^{™}.

In some embodiments, to mimic a human user's interaction with a user interface of a target application, RPA robot **22** interfaces with a set of RPA drivers **25** executing on the respective RPA client/host computer. Such drivers generically represent software modules that carry low-level operations such as moving a cursor on screen, registering and/or executing mouse, keyboard, and/or touchscreen events, detecting a current posture/orientation of a handheld device, detecting a current accelerometer reading, taking a photograph with a smartphone camera, grabbing a screenshot of the respective device, etc. Some such drivers form a part of the local operating system. Other RPA drivers **25** may implement various application-specific aspects of a user's interaction with complex target applications such as SAP^{®}, Citrix^{®} virtualization software, Microsoft Excel^{®}, etc. One particular example comprises a browser driver, which may be embodied as a set of browser-compatible scripts (e.g. JavaScript^{®}). When injected into a web page currently displayed within the browser, such a browser driver may identify various elements of the respective web page (e.g., buttons, menus, form fields, etc.), and may invoke a specific functionality of a respective element (e.g., type into a form field, select a menu item, toggle a checkbox, etc.). Other exemplary RPA drivers **25** include the Microsoft^{®} WinAppDriver, XCTest drivers from Apple, Inc., and UI Automator drivers from Google, Inc.

Types of robots may include attended robots **122,** unattended robots **222,** development robots (similar to unattended robots, but used for development and testing purposes), and nonproduction robots (similar to attended robots, but used for development and testing purposes), among others. Some activities of attended robots **122** are triggered by user events and/or commands and operate alongside a human operator on the same computing system. In some embodiments, attended robots **122** can only be started from a robot tray or from a command prompt and thus cannot be entirely controlled by conductor **24** and cannot run under a locked screen, for example. Unattended robots may run unattended in remote virtual environments and may be responsible for remote execution, monitoring, scheduling, and providing support for work queues.

In some embodiments executing in a Windows^{®} environment, robot **22** installs a Microsoft Windows^{®} Service Control Manager (SCM)-managed service by default. As a result, such robots can open interactive Windows^{®} sessions under the local system account and have the processor privilege of a Windows^{®} service. For instance, a console application may be launched by a SCM-managed robot. In some embodiments, robot **22** may be installed at a user level of processor privilege (user mode, ring 3.) Such a robot has the same rights as the user under which the respective robot has been installed. For instance, such a robot may launch any application that the respective user can. On computing systems that support multiple interactive sessions running simultaneously (e.g., Windows^{®} Server 2012), multiple robots may be running at the same time, each in a separate Windows^{®} session, using different usernames.

In some embodiments, robots **22** are split into several components, each being dedicated to a particular automation task. The robot components in some embodiments include, but are not limited to, SCM-managed robot services, user-mode robot services, executors, agents, and command-line. Depending on platform details, SCM-managed and/or user-mode robot services manage and monitor Windows^{®} sessions and act as a proxy between conductor **24** and the host machines (i.e., the computing systems on which robots **22** execute). These services are trusted with and manage the credentials for robots **22.** The command line is a client of the service(s), a console application that can be used to launch jobs and display or otherwise process their output.

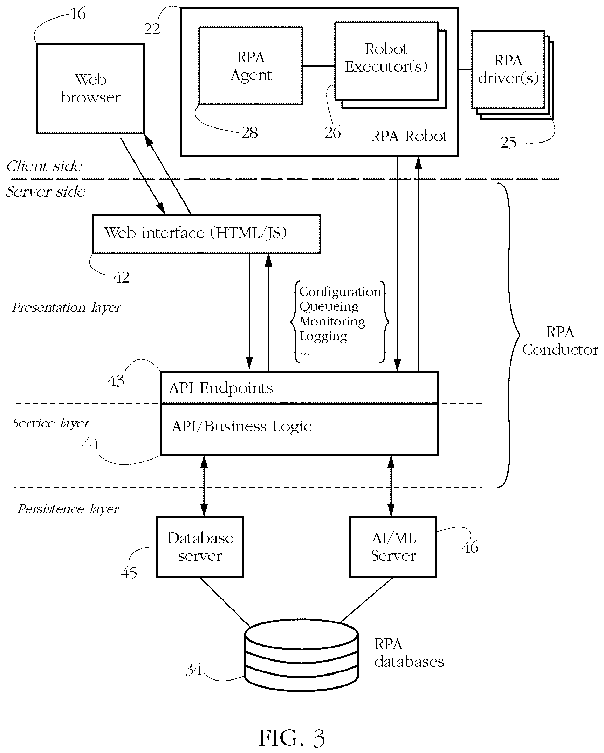

An exemplary set of robot executors **26** and an RPA agent **28** are illustrated in Fig. **3****.** Robot executors **26** may run given jobs under a Windows^{®} session. Executors **26** are configured to receive RPA package **50** specifying a workflow (e.g., sequence of robotic activities), and to execute the respective package which effectively amounts to carrying out the respective sequence of RPA activities. In some embodiments, package **50** comprises pre-compiled executable code. In other exemplary embodiments, robot executor(s) **26** comprise an interpreter (e.g., a just-in-time interpreter or compiler) configured to translate a received RPA script comprising a workflow specification (e.g., bytecode, XML, JSON etc.) into runtime code comprising processor instructions for carrying out the respective workflow. Executing RPA package **50** may thus comprise executor(s) **26** translating a workflow specification included in package **50** and instructing a processor of the respective host machine to load the resulting runtime code into memory and to launch the runtime code into execution.

RPA agent **28** may manage the operation of robot executor(s) **26.** For instance, RPA agent **28** may select tasks/scripts for execution by robot executor(s) **26** according to an input from a human operator and/or according to a schedule. Agent **28** may start and stop jobs and configure various operational parameters of executor(s) **22.** When robot **22** includes multiple executors **26,** agent **28** may coordinate their activities and/or inter-process communication. RPA agent **28** may further manage communication between RPA robot **22** and conductor **24** and/or other entities.

Exemplary RPA system **20** in Fig. **2** forms a part of hyper-automation system **10** (see Fig. **1****).** As such, robots **22** may interact with various components and use various aspects of hyper-automation core system **30,** illustrated generically as hyper-automation services **23** in Fig. **2****.** For instance, developers may use RPA design application **40** to build and test RPA robots **22** that utilize Al/ML models 36. Such RPA robots **22** may send input for execution of the AI/ML model(s) and receive output therefrom via hyper-automation core system **30.** Robot **22** may be a listener, as described above. These listeners may provide information to core hyper-automation system **30** regarding what users are doing when they use their computing systems. This information may then be used by hyper-automation system **30** for process mining, task mining, task capture, etc. In another exemplary embodiment, hyper-automation services **23** may expose data labeling functionality to user of the computing system hosting robot **22** or to another computing system that robot **22** provides information to. For instance, if robot **22** calls a computer vision AI/ML model **36** but the respective model does not correctly identify a button on the screen, the user may explicitly provide a correct identification. Such information may be passed on to hyper-automation core system **30** and then used for re-training the respective Al/ML model.

In some embodiments, selected components of hyper-automation system **10** and/or RPA system **20** may execute in a client-server configuration. In one such configuration illustrated in Fig. **3****,** RPA robot **20** including executor(s) **26** and RPA agent **28** may execute on a client side, for instance on one of RPA client computers **12a-c** in Fig. **1****.** In turn, the functionality of conductor **24** and/or other services of hyper-automation core system **30** may be implemented on the server side, e.g., on remote RPA servers **32** (Fig. **1****).** It should be noted that the client side, the server side, or both, may include any desired number of computing systems (e.g., physical or virtual machines) without deviating from the scope of the invention. The illustrated RPA system may be cloud-based, on-premises, or a combination thereof, offering enterprise-level, user-level, or device-level automation solutions for automation of different work processes.

Robot **22** may run several jobs/workflows concurrently. RPA agent **28** (e.g., a Windows^{®} service) may act as a single client-side point of contact of multiple executors **26.** Agent **28** may further manage communication between robot **22** and conductor **24.** In some embodiments, communication is initiated by RPA agent **28,** which may open a WebSocket channel to conductor **24.** Agent **28** may subsequently use the channel to transmit notifications regarding the state of each executor **26** to conductor **24,** for instance as a heartbeat signal. In turn, conductor **24** may use the channel to transmit acknowledgements, job requests, and other data such as RPA packages **50** to robot **22.**

In one embodiment as illustrated in Fig. **3****,** conductor **24** includes a web interface **42** and a set of service modules comprising a set of Application Programming Interface (API) endpoints **43** and service APIs/business logic **44.** A user may interact with conductor **24** via web interface **42** (e.g., by opening a dedicated web page on a browser **16),** to instruct conductor **24** to carry out actions such as scheduling and/or starting jobs on robot **22,** creating robot groups/pools, assigning workflows to robots, adding/removing data to/from queues, analyzing logs per robot or workflow, etc. Interface **42** may be implemented using Hypertext Markup Language (HTML), JavaScript (JS), or any other data format known in the art.

Conductor **24** may carry out actions requested by the user by selectively calling service APIs/business logic **44** via endpoints **43.** In addition, some embodiments use API endpoints **43** to communicate between RPA robot **22** and conductor **24,** for tasks such as configuration, logging, deployment, monitoring, and queueing, among others. API endpoints **43** may be set up using any data format and/or communication protocol known in the art. For instance, API endpoints **43** may be Representational State Transfer (REST) and/or Open Data Protocol (OData) compliant.

Configuration endpoints may be used to define and configure application users, permissions, robots, assets, releases, etc. Logging endpoints may be used to log different information, such as errors, explicit messages sent by robot **22,** and other environment-specific information. Deployment endpoints may be used by robot **22** to query the version of RPA package **50** to be executed. Queueing endpoints may be responsible for queues and queue item management, such as adding data to a queue, obtaining a transaction from the queue, setting the status of a transaction, etc. Monitoring endpoints may monitor the execution of web interface **42** and/or RPA agent **28.**

Service **APIs 44** comprise computer programs accessed/called through configuration of an appropriate API access path, e.g., based on whether conductor **24** and an overall hyper-automation system have an on-premises deployment type or a cloud-based deployment type. Exemplary APIs **44** provide custom methods for querying stats about various entities registered with conductor **24.** Each logical resource may be an OData entity in some embodiments. In such an entity, components such as a robot, process, queue, etc., may have properties, relationships, and operations. APIs **44** may be consumed by web application **42** and/or RPA agent **28** by getting the appropriate API access information from conductor **24,** or by registering an external application to use the OAuth flow mechanism.

In some embodiments, a persistence layer of server-side operations implements a database service. A database server **45** may be configured to selectively store and/or retrieve data to/from RPA databases **34.** Database server **45** and database **34** may employ any data storage protocol and format known in the art, such as structured query language (SQL), ElasticSearch^{®}, and Redis^{®}, among others. Exemplary data stored/retrieved by server **45** may include configuration parameters of robots **22** and robot pools, as well as data characterizing workflows executed by robots **22,** data characterizing users, roles, schedules, queues, etc. In some embodiments, such information is managed via web interface **42.** Another exemplary category of data stored and/or retrieved by database server **45** includes data characterizing the current state of each executing robot, as well as messages logged by robots during execution. Such data may be transmitted by robots **22** via API endpoints **43** and centrally managed by conductor **24,** for instance via API logic **44.**

Server **45** and database **34** also store/manage process mining, task mining, and/or task capture-related data, for instance received from listener modules executing on the client side as described above. In one such example, listeners may record user actions performed on their local hosts (e.g., clicks, typed characters, locations, applications, active elements, times, etc.) and then convert these into a suitable format to be provided to and stored in database **34.**

In some embodiments, a dedicated AI/ML server **46** facilitates incorporation of Al/ML models **36** into automations. Pre-built Al/ML models, model templates, and various deployment options may make such functionality accessible even to operators who lack advanced or specialized AI/ML knowledge. Deployed robots **22** may call Al/ML models **36** by interfacing with AI/ML server **46.** Performance of the deployed Al/ML models **36** may be monitored and the respective models may be re-trained and improved using human-validated data. AI/ML server **46** may schedule and execute training jobs and manage training corpora. Al/ML server **46** may further manage data pertaining to AI/ML models **36,** document understanding technologies and frameworks, algorithms and software packages for various Al/ML capabilities including, but not limited to, intent analysis, natural language processing (NLP), speech analysis and synthesis, computer vision (image processing, segmentation, and recognition), etc.

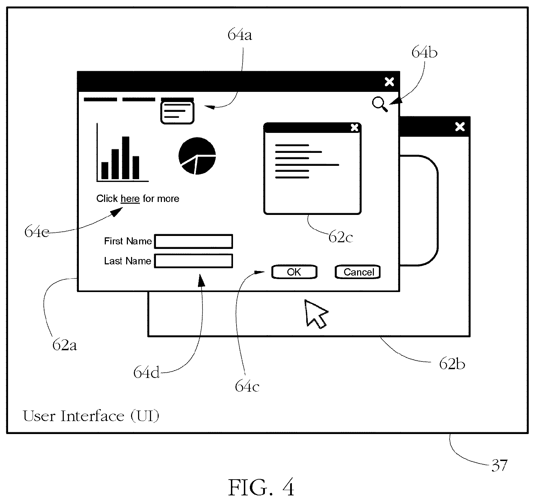

Embodiments of the present invention are directed at automating interactions with user interfaces. Fig. **4** illustrates an exemplary user interface **37** according to some embodiments of the present invention. In general, a user interface (UI) is a computer interface that enables human-machine interaction, e.g., an interface configured to receive user input, respond to the respective input, and communicate results of a computation back to the user. User interfaces frequently include a visual representation of a target document (e.g., an HTML document, a form, a spreadsheet, etc.) and a set of UI control elements enabling the user to manipulate or otherwise interact with the respective target document. A common example of user interface is known as a graphical user interface (GUI), which enables human-machine interaction via a set of graphical UI elements displayed to the user. Exemplary UI elements illustrated in Fig. **4** include a window **62a-c,** a menu **64a,** an icon **64b,** a button **64c,** an input field **64d,** and a hyperlinked text **64e** (also known as a link label or anchor text). Other exemplary UI elements comprise, among others, a label, a text area, a form having multiple input fields, and a toggle. Some UI elements may be nested within other UI elements. For instance, a menu may have multiple menu items and/or submenus, a form may have multiple input fields of various types, etc. UI elements may play various functional roles, such as containers for displaying information, input controls, navigational controls, etc.

In typical UI automations, an RPA robot is configured to emulate a human user's interaction with various elements of a target UI, for instance the user's clicking on button **64c** or filling out input field **64d** of target UI **37**. RPA typically comprises two distinct stages. In a first stage denoted herein as design-time, an RPA designer configures the RPA robot to carry out the desired automation. Designing the respective automation may include indicating a set of RPA activities to carry out, and providing data enabling the robot to correctly identify the target of each such activity, *i.e.,* the correct input field to fill in, the correct button to click, etc. Target identification is typically done according to a set of attributes characteristic of the respective target. Target characteristics may be programmatic (i.e., extracted from or determined according to a source code and/or an internal computer representation of the target document, such as a UI tree or DOM) and/or visual (e.g., on-screen position, image, color, label, etc.). Once determined, the target characteristics may be included in the workflow specification. In a subsequent stage of automation commonly referred to as runtime, the RPA robot effectively executes the respective workflow, i.e., carries out the RPA activities as specified in the workflow specification. To achieve this, the robot must correctly identify the activity targets within the target UI and act on them.

Crucially, the target UI used at design time (herein deemed design-time UI) is typically not the same as the target UI used at runtime (herein deemed runtime UI), since the design and execution of the respective workflow may be separated in space and time. Instead, the design-time UI and runtime UI are merely instances of the same target UI, the respective target UI defined by an identity of a target document rendered by the respective target UI. Stated otherwise, both the design-time UI and the runtime UI display a document/resource having the same identifier (e.g., document name, universal resource identifier - URI, location such as a universal resource locator - URL, etc.). However, sometimes the content and/or layout of the target document unexpectedly changes between design-time and runtime, since the target document is maintained independently of the automation itself. Following such changes, the design-time and runtime instances of the target UI may differ. For instance, some target-identification data of various UI elements may change, causing the automation to fail.

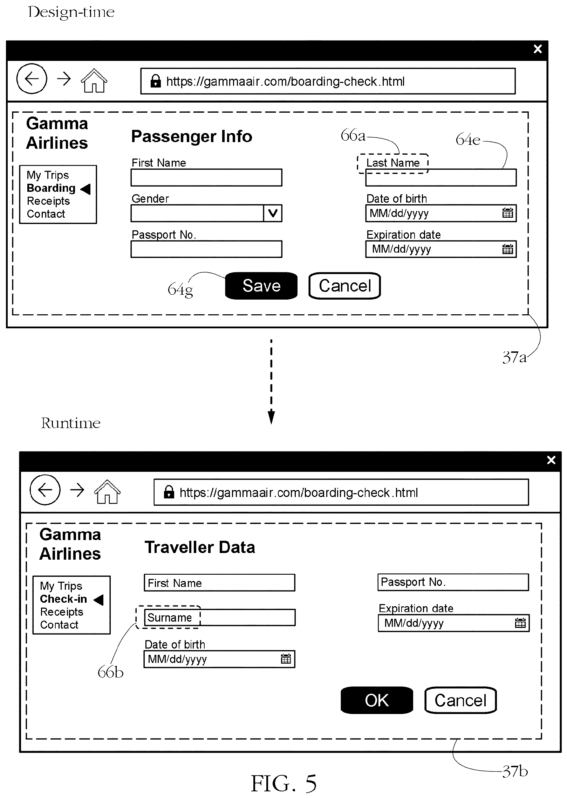

In one such exemplary use-case scenario illustrated in Fig. **5****,** an RPA robot is tasked with automatically filling out a web-based airport check-in form (*i.e.,* the target document, herein comprising an HTML form with the illustrated URL) with passenger data. At design time, the automation designer designs an RPA workflow that includes activities for interacting with a design-time instance of the target UI, herein an exemplary design-time UI **37a**. For instance, an RPA activity of the workflow may comprise filling in target input field **64e,** while another RPA activity of the workflow may comprise clicking on button **64g.**

Fig. **5b** further shows an exemplary runtime UI **37b** encountered by RPA robot **22** at runtime. While being an instance of the same the same web form used to design the respective automation (as indicated for instance by the same URL), runtime UI **37b** differs slightly from design-time UI **37a**. Exemplary changes include changes in the relative positions of some input fields, some menu items, as well as the positioning and/or content of some input field labels. Furthermore, the type of visual elements used to label input fields have changed, e.g., from simple text in UI **37a** to default input/placeholder values in UI **37b**. Such changes may cause an automation to fail because the RPA robot may no longer correctly identify activity targets. In the example illustrated in Fig. **5****,** the robot may be configured to fill in input field **64e** but may be unable to find an input field with the respective characteristics within runtime UI **37b**. Similarly, a robot configured to click on button **64g** may fail to find such a button with the runtime UI. Some embodiments of the present invention directly address such shortcomings.

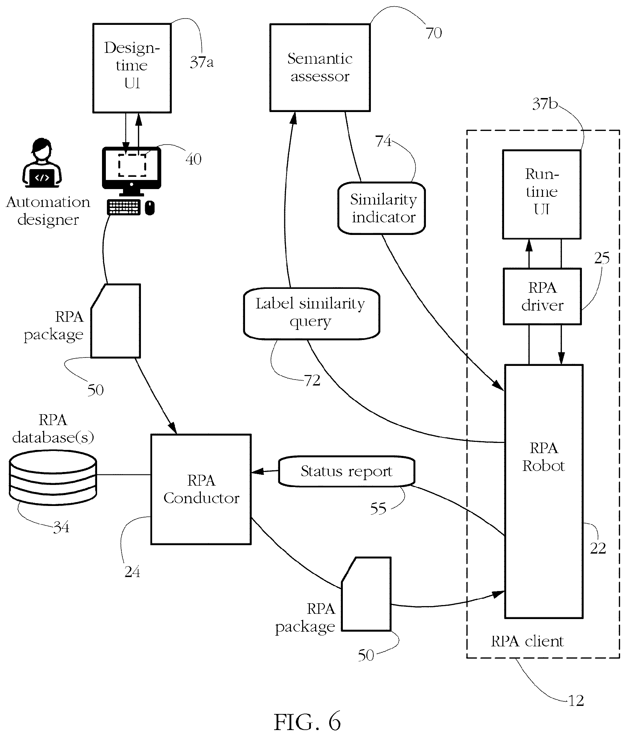

Fig. 6 shows an exemplary data exchange according to some embodiments of the present invention. At design time, an automation designer uses an instance of RPA design application **40** to design an automation workflow. Application **40** may interact with a design-time instance of a target UI, *i.e.*, design-time UI **37a**. An RPA package **50** including a specification of the respective workflow is then delivered to RPA conductor **24** for further distribution to an RPA client **12,** which generically represents any of RPA clients **12a-c** in Fig. **1****.** In the airport check-in automation example above, RPA client **12** may comprise a desktop computer located at an airport terminal, or a cloud computing platform operated by the respective airline. RPA client **12** executes an instance of RPA robot **22,** which interacts with a runtime instance of the target UI (runtime UI **37b**) via local instance of RPA driver(s) **25** and transmits status reports **55** on the progress of the respective automation to RPA conductor **24.** In some embodiments of the present invention, RPA robot **22** and/or driver(s) **25** may collaborate with a semantic assessor module **70** to correctly identify activity targets as shown in detail below. A skilled artisan will know that the system illustrated in Fig. **6** is only exemplary and can be modified without altering the scope of the present invention. For instance, in alternative embodiments, the respective automation may execute locally, *i.e.,* on the computer that also executes RPA design application **40** and without involvement of RPA conductor **24.**

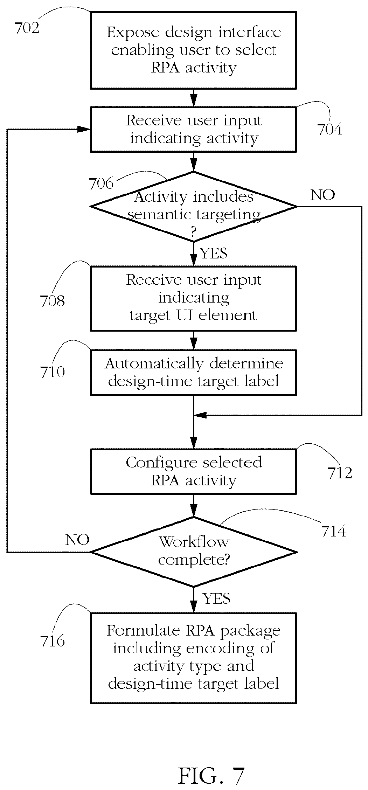

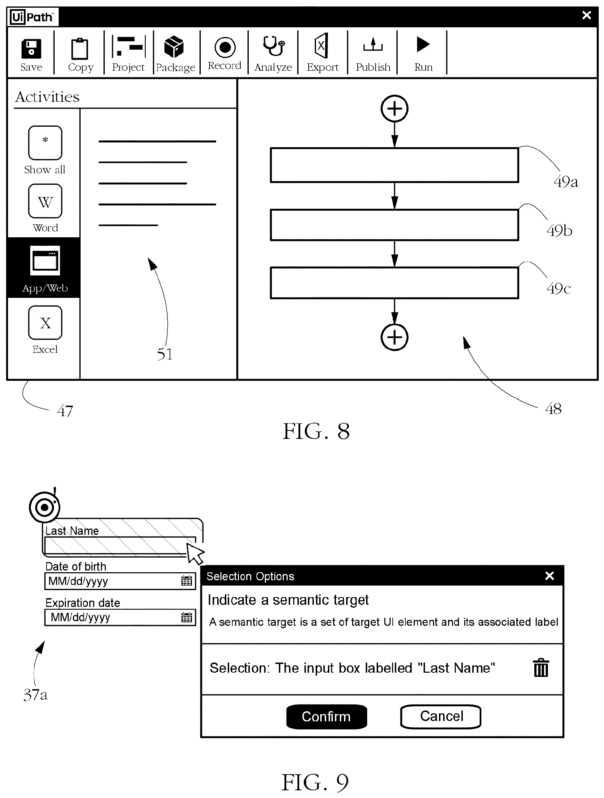

Fig. **7** shows an exemplary sequence of steps performed by RPA design application **40** to design an automation workflow directed at interacting with a target UI according to some embodiments of the present invention. A step **702** exposes a robot design interface to the user/automation designer. An exemplary robot design interface **47** is illustrated in Fig. **8** and draws a visual representation of an RPA workflow **48** as a sequence of RPA activities. An artisan will understand that the content and appearance of interface **47** are only exemplary and not meant to be limiting. In the illustrated example, each RPA activity or group of activities of the workflow is represented by an individual activity container **49a-c,** each such container optionally displaying an activity configuration interface for configuring various parameters of the respective RPA activity. Containers **49a-c** may comprise children windows of interface **47.** In some embodiments, containers **49a-c** may be nested, i.e., some containers may further include a hierarchy of sub-containers representing individual RPA activities, etc. Robot design interface **47** may further expose various controls enabling the user to add, delete, and re-arrange activities of workflow **48.**

In some embodiments as illustrated, robot design interface **47** further displays an activity menu **51** listing or otherwise enabling the user to select RPA activities for inclusion into workflow **48.** Activities may be grouped according to various criteria, for instance, according to a type of user interaction (e.g., clicking, tapping, gestures, hotkeys), according to a type of data (e.g., text-related activities, image-related activities), according to a type of data processing (e.g., navigation, data scraping, form filling), according to a type of target application (e.g., browser, spreadsheet, word processing), etc. In some embodiments, individual RPA activities may be reached via a hierarchy of submenus.

In a step **704,** RPA design application **40** may receive a user input selecting an RPA activity for inclusion into workflow **48.** Step **704** may further include re-drawing workflow **48** to include the newly selected RPA activity, e.g., adding an activity container and positioning it as desired within workflow **48.**

Some RPA activities invoked via activity menu **51** may include semantic targeting, which herein denotes identifying the target of the respective activity according to semantic criteria such as a meaning of a label attached to a target UI element as described below. Some embodiments may allow the user to select between activities that use semantic targeting and activities that do not. For instance, menu **51** may include a form-filling activity that identifies a target input field by conventional means (*e.g*., via programmatic attributes such as a set of attribute-value pairs characterizing the respective UI element and determined according to a DOM) and another form-filling activity that uses semantic targeting to identify the respective input field. The user may thus have a choice between the two, based on the observation that each activity may be better suited to a distinct type of target UI.

A step **706** may determine whether the selected RPA activity comprises semantic targeting. When NO, some embodiments may proceed with activity-specific configuration actions which go beyond the scope of the present description. When the selected activity includes semantic targeting (step **704** returns a YES), in a step **708** application **40** may receive a user input indicating a target UI element, herein denoting a UI element of UI **37a** targeted by the respective RPA, *e.g*., a button to be clicked, an input field to be filled-in, etc. In some embodiments, the target-selecting user input comprises the user's hovering over, clicking, or tapping the desired element within the UI **37a**. Some embodiments may further display a semantic target selection interface to the user, for instance as an overlay. An exemplary semantic target selection interface as described herein is illustrated in Fig. **9****,** wherein the target element selected by the user (an input field of UI **37a** in the shown example) is highlighted for clarity. The target selection interface may further enable the user to confirm or cancel a selected target element.

In a step **710,** some embodiments may determine a design-time target label, herein denoting a text label/character string displayed within design-time UI **37a** in a vicinity of the selected target element. Exemplary target labels illustrated in Fig. **5** include label **66a** associated with target input field **64a** and the label 'Save' displayed on target button **64g.** Determining the design-time target label may comprise using RPA driver(s) **25** to analyze UI **37a** (e.g., a DOM in the case of a web page as illustrated in Fig. **5****)** to identify candidate labels. Exemplary candidate labels include a fragment of text displayed by the UI, such as a title of a section of the target document, a label of a menu item displayed by the UI, a default value of an input field, a placeholder value of an input field, and alternative text or text content of a tooltip displayed while hovering over a target element, among others. Other exemplary candidate labels, such as an element name, for instance, may be determined according to a source code and/or internal computer representation (e.g., HTML, DOM) of the respective target document. Some embodiments may then apply a set of heuristics to sort through multiple label candidates, for instance based on observations that a label is typically short (e.g., a few words), sits closest to the associated target element, and is typically aligned with the respective target element (e.g., directly on top, above, to the left, etc.).

Alternative embodiments may use artificial intelligence/machine learning to determine the target label. In one such example, step **710** may comprise taking a snapshot of at least a region of UI **37a** including the user-selected target element, and transmitting the respective snapshot to a pre-trained Al/ML module for analysis. The respective module may form a part of Al modules **36** described in relation to Fig. 1 and may combine image processing with optical character recognition to determine the target label according to the received snapshot. In some embodiments, step **710** may further include displaying the detected target label to the user (as shown for instance in Fig. **9****)** for confirmation. When automatic label detection fails, the user may be invited to indicate a target label manually.

In a further step **712** some embodiments of robot design application **40** may receive user input further configuring various parameters of the selected RPA activity. In the example of an input field, step **712** may receive user input indicating a value to be filled into the respective input field at runtime. The respective value may be explicit (e.g., a user-provided text string) or may reference another data structure, possibly even including an output of another RPA activity of workflow **48.**

The workflow design process may continue with the user selecting and configuring other RPA activities as shown above. When design of the current workflow is complete (a step **714** returns a YES), in a further step **716** some embodiments may formulate RPA package **50** of the current workflow, including computer-readable encodings of the selected RPA activity and target identification data such as a design-time target label determined in step **710.**

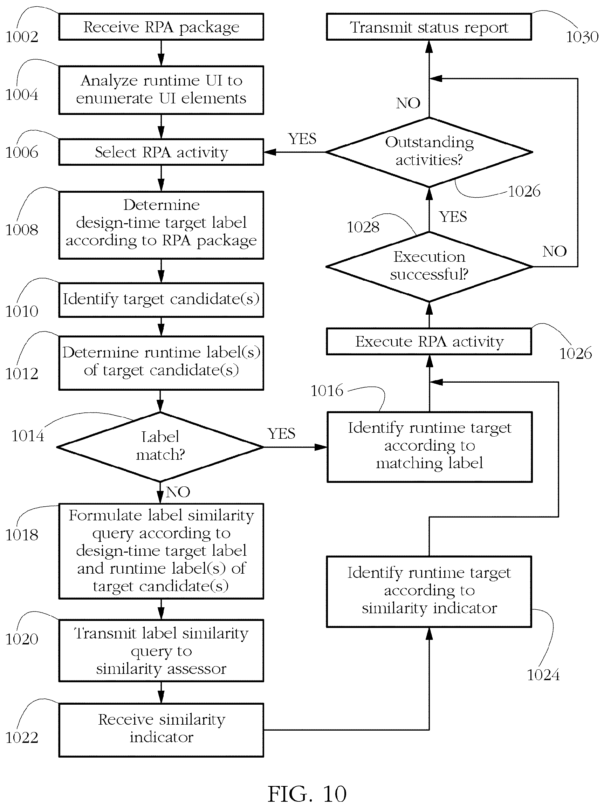

Fig. **10** shows an exemplary sequence of steps carried out by RPA robot **22** at runtime, according to some embodiments of the present invention. In a step **1002,** robot **22** may receive RPA package **50** specifying a workflow for execution. Depending on embodiment, package **50** is received from RPA conductor **24** or directly from an instance of RPA design application **40,** as described above. In a further step **1004,** robot **22** may expose a runtime instance of the target UI, herein denoted as runtime UI **37b** (see e.g., Fig. **5****).** In an exemplary use case scenario wherein the target UI comprises a web page, robot **22** may invoke an instance of a browser window and navigate to a target URL indicated in RPA package **50.** Similar operations may expose runtime UI **37** in cases wherein the current workflow targets other kinds of applications (e.g., electronic communication applications, spreadsheet applications, etc.). Some embodiments then collaborate with RPA driver(s) **25** to analyze runtime UI **37**, for instance to enumerate UI elements for identification as candidate targets for various RPA activities. In the example of a web page automation, step **1004** may comprise, for instance constructing and/or analyzing a DOM of the respective web page.

Some embodiments may then iterate through all RPA activities of the respective workflow as described in the received RPA package. A step **1006** may select an RPA activity from the workflow. The specification of the respective activity will typically include a set of target identification data enabling robot **22** to correctly identify a runtime instance of a target of the respective RPA activity. In a further step **1008,** robot **22** may extract the design-time label of the respective target UI element from the target identification data. Such a label was included in RPA package at design time (see e.g., steps **710** and **716** in Fig. **7****).**

In a sequence of steps **1010-1012,** robot **22** may then identify a set of candidate target elements within runtime UI **37b** according to design-time target identification data such as the design-time target label. Step **1010** may include analyzing runtime UI **37** to identify a set of UI elements having the same type (e.g., input field) as the target of the current RPA activity. For each such candidate UI element, step **1012** may determine a runtime label, *i.e.,* the label associated with the respective UI element within runtime UI **37b**. Exemplary runtime labels include label **66b** and the word 'OK' in UI **37b** of Fig. **5****.** Determining runtime labels may comprise a similar procedure to that used at design-time to determine the design-time target label (see e.g., step **710** in Fig. **7****).**

A step **1014** may then determine if any of the runtime labels matches the design-time target label. When yes, in a step **1016** RPA robot **25** identifies the runtime target element as the target candidate whose runtime label exactly matches the label determined at design time.

When none of the runtime labels matches the design-time targe label, some embodiments may identify the runtime target according to a similarity between the design-time target label and runtime labels. As illustrated in Fig. **6****,** some embodiments may transmit a label similarity query **72** to a semantic assessor **70** and in response, receive a similarity indicator **74** from assessor **70,** indicator **74** determined according to similarity query **72** and quantifying a similarity between the design-time label of the target UI element and labels of runtime target candidates. In some embodiments, semantic assessor module **70** comprises a set of computer programs, which may execute locally on RPA client **12,** or on a remote computer system. For instance, semantic assessor **70** may form a part of Al modules **36** (Fig. **1****)** and/or execute on Al/ML server **46** (Fig. **3****).** In alternative embodiments, some or all of assessor **70** may be implemented in dedicated hardware, or as a combination of hardware and software. A single instance of assessor module **70** may perform semantic similarity calculations for a plurality of RPA clients **12.**

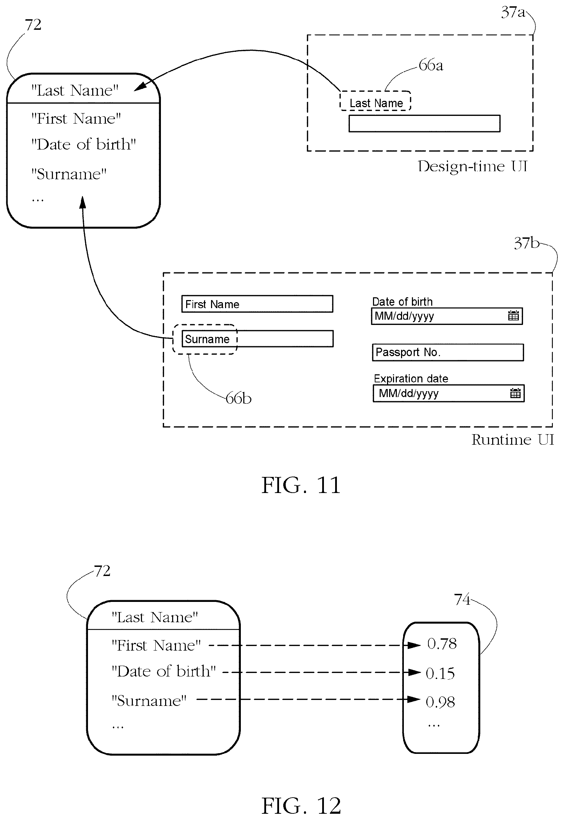

In a step **1018** robot **22** may formulate label similarity query **72.** An exemplary query **72** according to some embodiments is illustrated in Fig. **11****.** Query **72** includes an encoding of design-time target label **66a**, i.e., label associated with a target UI element in design-time UI **37a** and included as target-identification data within RPA package **50.** Query **72** further includes an encoding of at least one runtime label **66b**, i.e., a label associated with a target candidate of runtime UI **37b**. A skilled artisan will know that the format and content of query **72** may vary without departing from the scope of the present invention. Also, it will be clear that in alternative embodiments, design-time and runtime labels may be submitted in separate queries/data packages.

Fig. **12** shows an exemplary similarity indicator **74** according to some embodiments of the present invention. Similarity indicator **74** quantifies a semantic similarity between the design-time target label and each runtime label included in a respective label similarity query **72.** In the illustrated example, indicator **74** comprises numbers ranging between 0 and 1, with 0 indicating no similarity and 1 indicating an exact match. However, the format and data type of indicator **74** may vary without departing from the scope of the present invention. Alternative exemplary indicators **74** may be Boolean, with YES indicating a match and NO indicating no semantic similarity, etc.

Semantic assessor **70** may use any method known in the art to evaluate a semantic similarity between design-time and runtime labels. Basic embodiments may use an annotated dictionary and/or thesaurus to determine whether two items are semantically similar (e.g., synonyms). Other embodiments may maintain a searchable database of natural language synsets, i.e., sets of words and phrases that are semantically similar to each other (e.g., last name, surname, and family name). One example of such a database developed for the English language is WordNet maintained by Princeton University in the US. Yet other embodiments may maintain a real-world collection of UI element labels and their runtime counterparts, for instance collected by instances of RPA robot **22** interacting with various target Uls. The respective labels may be organized according to element type (e.g., input field labels vs. button labels, etc.).

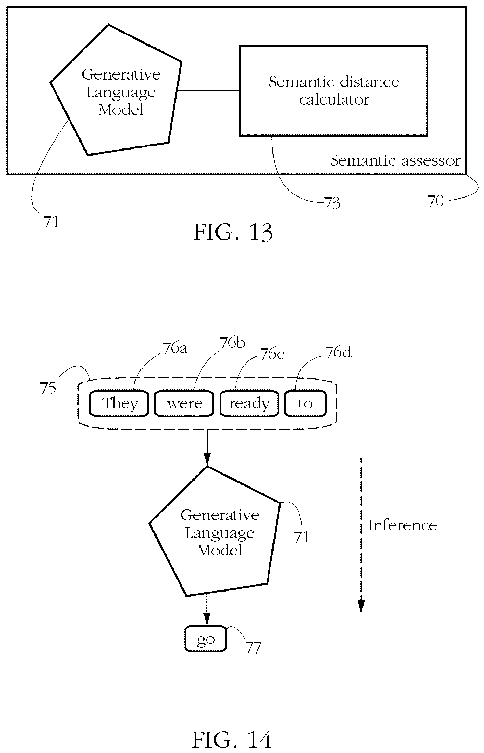

More sophisticated embodiments of semantic assessor **70** may rely on language models (LMs), which are computational, probabilistic models of a natural language. Examples include word *n*-gram models, skip-gram models, and large language models (LLMs), among others. Fig. **13** shows an exemplary semantic assessor **70** comprising a generative language model (GLM) **71** communicatively coupled to a semantic distance calculator **73.** GLM **71** is herein deemed 'generative' in the sense that it is configured to input a sequence of words and in response, automatically generate another sequence of words comprising a plausible continuation of the input word sequence. GLM **71** may be implemented using any method known in the art of artificial intelligence. For instance, GLM **71** may comprise a set of artificial neural networks (e.g., recurrent neural networks, generative pre-trained transformers - GPT, etc.) trained on a corpus of text formulated in the respective natural language. In some embodiments, GLM **71** implements an instance of a pre-trained, off-the-shelf LLM such as GPT-3 from OpenAl, LLaMA from Meta Al, and Mistral from Mistral Al, among others. The structural and operational details of such models go beyond the scope of the present invention.

A basic operation of GLM **71** according to some embodiments of the present invention is illustrated in Fig. **14****.** GLM **71** receives a language model prompt **75** comprising a sequence of text tokens **76a-d,** and in response, outputs a predicted text token **77** determined according to LM prompt **75,** token **77** comprising a likely continuation of the sequence of tokens **76a-d** of LM prompt **75.** The set of calculations carried out by GLM **71** to produce an individual predicted token (not including the LM initialization steps described below) is commonly known in the art as an inference step. When the architecture of GLM **71** is based on neural networks, such calculations may comprise matrix multiplications and evaluating a set of activation functions, among others. Training such a GLM typically comprises selecting the input token sequence from a learning corpus consisting of actual text samples, comparing predicted token **77** with the actual continuation of the input sequence within the respective text sample, and adjusting a set of internal parameters of the GLM (e.g., neural synapse weights) with the aim of correcting wrong inferences. Modern GLMs typically have in the order or several hundreds of thousands to several billion adjustable parameters. Training may employ any machine learning algorithm known in the art, such as a version of backpropagation, among others.

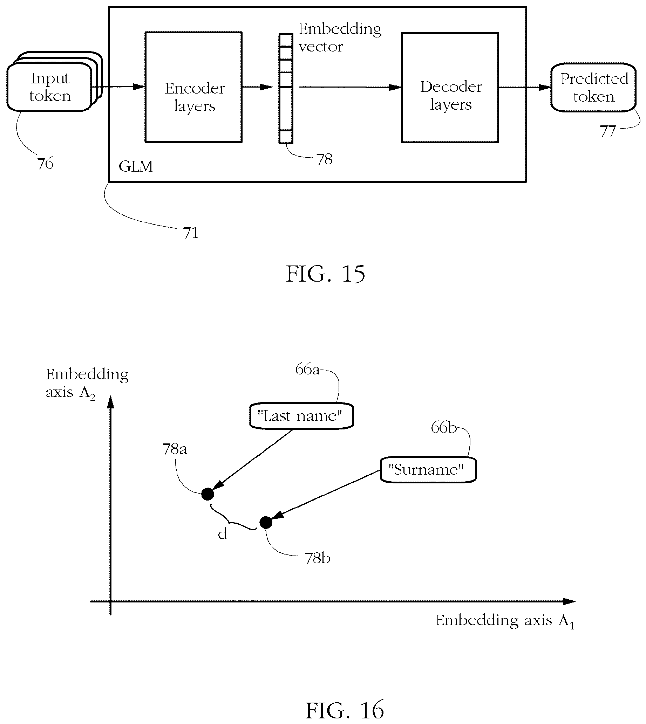

In some embodiments, GLM **71** comprises a sandwich of neural network layers as illustrated in Fig. **15****,** wherein a first set of layers act as an encoder receiving an input token **76** and outputting an internal representation of the respective token commonly known in the art as an embedding vector **78** or simply as an embedding. Embedding vector **78** comprises a set of numbers collectively amounting to a projection of token **76** in an abstract multi-dimensional space known as an embedding space. The coordinates of the embedding vector depend not only on the respective token, but also on the training corpus, since the parameters of the encoder layers are determined through training. Some embodiments produce a separate vector **78** for each input token of LM prompt **75.** Another set of neural network layers then acts as a decoder, taking such embedding vectors **78** and transforming them to produce predicted token **77.**

Fig. **16** shows an exemplary embedding space spanned by two abstract axes, and two embedding vectors **78a-b** representing design-time target label **66a** and runtime label **66b,** respectively. A skilled artisan will know that the illustration is merely schematic and not limiting, since embedding spaces typically have thousands of dimensions. In some embodiments, semantic distance calculator **73** may calculate a similarity measure quantifying a semantic similarity between design-time and runtime labels according to the respective embedding vectors. In such embodiments, calculator **73** may receive an output of the encoder part of GLM **71** and evaluate the similarity measure according to a distance between embedding vectors representing the design-time target label and each runtime label of a target candidate. In the example illustrated in Fig. **16****,** the similarity measure between labels **66a-b** may be determined according to a distance *d* separating vectors **78a-b** in the embedding space. The distance may be calculated using any expression known in the art, for instance as an Euclidean distance, Manhattan distance, cosine distance, etc., or a combination thereof.

In some embodiments, in a sequence of steps **1020-1022** (Fig. **10****),** robot **22** may transmit label similarity query **72** to assessor module **70** and in response, receive similarity indicator **74** calculated according to query **72.** In some embodiments as illustrated in Fig. **12****,** similarity indicator **74** may include a set of similarity measures, each similarity measure determined for a distinct runtime label and indicative of a similarity between the design time target label and a respective runtime label. Such similarity measures may be scaled so that values close to 1 indicate a strong similarity, while values close to 0 indicate no similarity. A step **1024** may identify the runtime target according to the content of similarity indicator **74.** For instance, robot **22** may select as runtime target of the current RPA activity the element of runtime UI **37** whose runtime label is most similar to the design-time target label according to similarity indicator **74.** Some embodiments may also implement an error-prevention strategy by comparing the received similarity indicator(s) to a pre-determined threshold and rejecting all target candidates having runtime labels with similarity measures below the threshold. When no runtime label is sufficiently similar to the design-time target label, some embodiments decide that the differences between design-time UI **37a** and runtime UI **37b** are too substantial for a safe continuation, suspend execution of the current workflow, and transmit a status report **55** informing on the error.

A step **1026** may then execute the respective RPA activity (e.g., click the identified button, fill in the identified input field, etc.). If the execution is successful (a step **1028** returns a YES), robot **22** may advance to the next RPA activity of the respective workflow. When all activities have been executed, a step **1030** may transmit status report **55,** for instance to RPA conductor **24.**

Some embodiments rely on the observation that semantic target identification as described herein is substantially more computationally expensive than conventional target identification for instance by matching a set of programmatic attribute-value pairs extracted from a DOM/UI tree. Reliable language models are relatively large and expensive to train and run. Furthermore, transmitting label similarity queries to a remote server inherently slows down target identification, impacting productivity and user experience. Therefore, to save computational resources and improve user experience, some embodiments may integrate semantic matching into an optimization strategy for target identification. In a first step, RPA robot **22** may attempt to identify the runtime target according to conventional methods. When such efforts fail, a second step may use semantic target identification as a fallback.

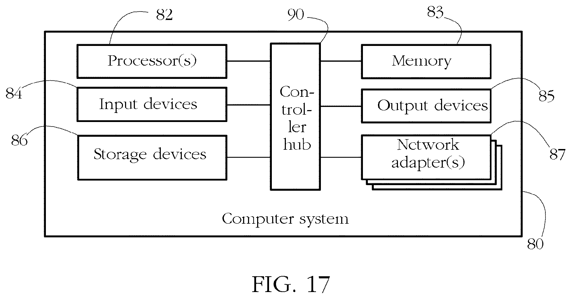

Fig. **17** shows an exemplary hardware configuration of a computer system **80** programmed to execute some of the methods described herein. Computer system **80** may represent any of RPA clients **12a-c,** as well as RPA server(s) **32** or any other computer executing RPA robot **22** and/or semantic assessor module **70.** The illustrated appliance is a personal computer; other computer systems such as servers, mobile telephones, tablet computers, and wearable computing devices may have slightly different configurations. Processor(s) **82** comprise a physical device (e.g. microprocessor, multi-core integrated circuit formed on a semiconductor substrate) configured to execute computational and/or logical operations with a set of signals and/or data. Such signals or data may be encoded and delivered to processor(s) **82** in the form of processor instructions, e.g., machine code. Processor(s) **82** may include a central processing unit (CPU) and/or an array of graphics processing units (GPU).

Memory unit **83** may comprise volatile computer-readable media (e.g. dynamic random-access memory - DRAM) storing data and/or instruction encodings accessed or generated by processor(s) **82** in the course of carrying out operations. Input devices **84** may include computer keyboards, mice, trackpads, and microphones, among others, including the respective hardware interfaces and/or adapters allowing a user to introduce data and/or instructions into computer system **80.** Output devices **85** may include display devices such as monitors and speakers among others, as well as hardware interfaces/adapters such as graphic cards, enabling the respective computing device to communicate data to a user. In some embodiments, input and output devices **84-85** share a common piece of hardware (e.g., a touch screen). Storage devices **86** include computer-readable media enabling the non-volatile storage, reading, and writing of software instructions and/or data. Exemplary storage devices include magnetic and optical disks and flash memory devices, as well as removable media such as CD and/or DVD disks and drives. Network adapter(s) **87** include mechanical, electrical, and signaling circuitry for communicating data over physical links coupled to an electronic communication network (e.g, Fig. **1**) and/or to other devices/computer systems. Adapter(s) **87** may be configured to transmit and/or receive data using a variety of communication protocols.

Controller hub **90** generically represents the plurality of system, peripheral, and/or chipset buses, and/or all other circuitry enabling the communication between processor(s) **82** and the rest of the hardware components of computer system **80.** For instance, controller hub **90** may comprise a memory controller, an input/output (I/O) controller, and an interrupt controller. Depending on hardware manufacturer, some such controllers may be incorporated into a single integrated circuit, and/or may be integrated with processor(s) **82.** In another example, controller hub **90** may comprise a northbridge connecting processor **82** to memory **83,** and/or a southbridge connecting processor **82** to devices **84, 85, 86,** and **87.**

The exemplary systems and methods described above facilitate UI automation by improving the automatic identification of activity targets, *i.e.*, UI elements acted upon by robotic software. Target identification poses a substantial technical problem because in many RPA applications the functionality and/or appearance of the target UI may change suddenly in ways which are beyond the control of robot designers. Some exemplary changes between design-time and runtime often encountered in real-life applications are shown in Fig. **5****.** Some UI elements may be removed, others may be re-positioned within the target UI. The composition of a menu may change, as well as an order and a labeling of individual menu items. Element attributes such as colors, fonts, labels, etc., may change. In conventional RPA, a robot is typically trained to recognize an activity target (e.g., a button to click, an input field to fill out) according to such characteristics, and therefore any changes in such characteristics may cause the respective automation to fail.

Some embodiments of the present invention directly address such shortcomings, while simultaneously facilitating robot design. At design time, a robot design interface enables an automation designer to indicate a target UI element, and in response, automatically identifies a text label associated with the respective target. The design-time target label is then included in a computer-readable specification of the respective workflow and transmitted to the RPA robot for execution. At runtime, the robot may search for a target having the indicated design-time label. When no such target can be found within the runtime instance of the target UI, some embodiments assemble a set of target candidates partially matching the design-time attributes of the respective target, and automatically determine a runtime text label associated with each such candidate. Some embodiments then identify the runtime target according to a semantic similarity (likeness in meaning, as opposed to wording) between the design-time label of the target and the labels of the runtime target candidates.

In evaluating semantic similarity, some embodiments benefit from the recent progress in natural language processing, and especially the advent of language models based on a transformer architecture (e.g. GPT from Open Al, Inc.). A measure of semantic similarity may be computed for instance according to a distance separating the design-time label and runtime label in an embedding space constructed by an LM. Even though language models are typically expensive to train and operate, some embodiments rely on the observation that UI labels are relatively compact and therefore semantically comparing them does not require the largest or most sophisticated LMs. Instead, computer experiments have revealed that successful semantic target identification may be carried out by small size, even portable LMs that can execute locally on the respective RPA client. Such small LMs may be developed and trained deliberately for semantic similarity measurements, and then incorporated into software distributions to clients.

By closely mimicking the way a human solves the problem of encountering unexpected changes in a familiar interface, some embodiments of the present invention manage to prevent a vast majority of target identification failures. A particular advantage of semantic target identification as described herein is that it allows using many types of text content (e.g., an actual label, a placeholder or default value of an input field, an alternative text/tooltip) as labels for semantic similarity evaluations. In a specific example illustrated in Fig. **5****,** not only the wording of the label changes (e.g., from 'Last Name' to 'Surname'), but also the type of the element effectively acting as a label changes. Whereas design-time label **66a** is a plain text element, label **66b** is a default or placeholder value of the respective input field. Programmatic characteristics of the runtime target thus differ substantially from those of the design-time target, which did not have a default/placeholder value. In an even more extreme example, runtime UI **37b** may display mock passenger data as placeholder values of the respective input fields (e.g., 'Bart' and 'Simpson' in place of the illustrated 'First Name' and 'Surname', respectively). Some conventional UI automation systems may not recognize such items as labels of the respective field, and even if they do, they may not be able to match the runtime label 'Simpson' or 'Surname' to the design-time label 'Last Name'. In contrast, in some embodiments of the present invention semantic targeting comprises interpreting both items **66a-b** as merely text labels and identifying the runtime target primarily according to a semantic similarity of the respective labels, thus overcoming the above-mentioned obstacles. In the example of mock passenger names, some embodiments of the present invention can determine for instance that 'Simpson' is semantically more similar to 'Last Name' than to 'First Name' or 'Gender'.

The disclosure and exemplary embodiments illustrated above have focused on just two types of targets: input fields and buttons (e.g., items **64e** and **64f** in Fig **5****,** respectively). However, the systems and methods described herein may equally be used to semantically identify other kinds of target UI elements. Examples include section headers and titles, whole menus, individual menu items (e.g., as exposed by unrolling a drop-down menu), and practically all hyperlinked elements of a target UI. In the example of a hyperlinked text (see e.g., item **64e** in Fig. **4****),** the respective anchor text may be used as a label for semantic similarity evaluations. When the target hyperlinked element does not naturally display a label (as in the case of icon **64b** in Fig. **4****,** for example), some embodiments may use a content of an alternative text or tooltip displayed when hovering over the respective target element.

Beside efficiently identifying runtime activity targets, some embodiments substantially simplify robot design. Conventional RPA typically requires specialized knowledge of RPA software and user interfaces (e.g., HTML, JavaScript^{®}, SAP^{®}, etc.), as well as substantial design experience. To design a successful RPA workflow, an automation designer must be able to predict or know from experience how a UI is likely to change in the future, and how to tweak target identification strategies according to the type and appearance of the target UI. For instance, some conventional RPA systems allow the designer to explicitly select a subset of target attributes (e.g., selected attribute-value pairs from a DOM of a target web page) to be used at runtime. An experienced designer will know which target attributes are less likely to change in the future and are therefore more robust target identifiers. In contrast, some embodiments of the present invention merely require that the designer indicate the target element, thus lowering the access threshold for developers lacking specialized skills.

Some embodiments further improve RPA design by including semantic targeting as an additional, complementary tool in the automation designer's toolbox. In an exemplary robot design interface, semantic targeting activities may be included as separate items on a menu of available RPA activities alongside RPA activities that use conventional target identification, thus giving the automation designer freedom to choose between semantic and conventional target identification according to a type and appearance of the target UI. Alternatively or additionally, semantic target identification may be incorporated into existing target identification methods as a fallback strategy, for situations where conventional methods fail.

It will be clear to one skilled in the art that the above embodiments may be altered in many ways without departing from the scope of the invention. Accordingly, the scope of the invention should be determined by the following claims and their legal equivalents.

## Claims

1. A computer system comprising at least one hardware processor configured to:
receive an encoding of a robotic process automation (RPA) activity and an encoding of a design-time target label, wherein the RPA activity mimics a human interaction with a target element of a user interface (UI), and wherein the design-time target label comprises a text label attached to the target element within a design-time instance of the UI;
in response, identify a runtime instance of the target element within a runtime instance of the UI exposed by the computer system, the runtime instance of the target element identified according to a similarity between a meaning of the design-time target label and a meaning of a label attached to the runtime instance of the target element; and
in response to identifying the runtime instance of the target element, execute the RPA activity on the runtime instance of the target element.

2. The computer system of claim 1, wherein identifying the runtime instance of the target element comprises:
selecting a candidate target element from the runtime instance of the UI;
automatically determining a candidate label comprising another text label attached to the candidate target element within the runtime instance of the UI;
transmitting the design-time target label and candidate label to a semantic assessor module;
receiving from the semantic assessor module a similarity measure quantifying a similarity between the meaning of the design-time target label and a meaning of the candidate label; and
determining whether the runtime instance of the target element comprises the candidate target element according to the similarity measure.

3. The computer system of claim 2, wherein identifying the runtime instance of the target element further comprises:
selecting a second candidate target element from the runtime instance of the Ul;
automatically determining a second candidate label comprising yet another text label attached to the second candidate target element within the runtime instance of the Ul;
transmitting the second candidate label to the semantic assessor module;
receiving from the semantic assessor module a second similarity measure quantifying a similarity between the meaning of the design-time target label and a meaning of the second candidate label; and
determining whether the runtime instance of the target element comprises the candidate target element further according to the second similarity measure.

4. The computer system of claim 2, wherein identifying the runtime instance of the target element comprises comparing the similarity measure to a pre-determined threshold and determining whether the runtime instance of the target element comprises the candidate target element according to a result of the comparison.

5. The computer system of claim 2, wherein the semantic assessor module is configured to employ a pre-trained generative language model (GLM) to determine the similarity measure.

6. The computer system of claim 5, wherein determining the similarity measure comprises:
employing the GLM to determine a first embedding vector of the design-time target label and a second embedding vector of the candidate label; and
determining the similarity measure according to a distance between the first and second embedding vectors.

7. The computer system of claim 1, wherein:
the target element comprises an input field of the UI;
the RPA activity comprises filling out the input field; and
the label attached to the runtime instance of the target element is determined according to a placeholder value of the input field, the placeholder value displayed by the runtime instance of the UI.

8. The computer system of claim 1, wherein the target element comprises an item selected from a set consisting of a button of the UI, a menu item of the UI, and a hyperlinked element of the UI, and wherein the RPA activity comprises clicking or tapping the item.

9. The computer system of claim 1, wherein:
the target element comprises a hyperlinked element of the UI; and
the at least one hardware processor is configured to determine the label attached to the runtime instance of the target element according to an alternative text or tooltip displayed by the runtime instance of the UI when hovering over the runtime instance of the target element.

10. A computer-implemented robotic process automation (RPA) method comprising employing at least one hardware processor configured to:
receive an encoding of an RPA activity and an encoding of a design-time target label, wherein the RPA activity mimics a human interaction with a target element of a user interface (UI), and wherein the design-time target label comprises a text label attached to the target element within a design-time instance of the UI;
in response, identify a runtime instance of the target element within a runtime instance of the UI exposed by the computer system, the runtime instance of the target element identified according to a similarity between a meaning of the design-time target label and a meaning of a label attached to the runtime instance of the target element; and
in response to identifying the runtime instance of the target element, execute the RPA activity on the runtime instance of the target element.

11. The method of claim 10, wherein identifying the runtime instance of the target element comprises:
selecting a candidate target element from the runtime instance of the UI;
automatically determining a candidate label comprising another text label attached to the candidate target element within the runtime instance of the UI;
transmitting the design-time target label and candidate label to a semantic assessor module;
receiving from the semantic assessor module a similarity measure quantifying a similarity between the meaning of the design-time target label and a meaning of the candidate label; and
determining whether the runtime instance of the target element comprises the candidate target element according to the similarity measure.

12. The method of claim 11, wherein identifying the runtime instance of the target element further comprises:
selecting a second candidate target element from the runtime instance of the Ul;
automatically determining a second candidate label comprising yet another text label attached to the second candidate target element within the runtime instance of the Ul;
transmitting the second candidate label to the semantic assessor module;
receiving from the semantic assessor module a second similarity measure quantifying a similarity between the meaning of the design-time target label and a meaning of the second candidate label; and
determining whether the runtime instance of the target element comprises the candidate target element further according to the second similarity measure.

13. The method of claim 11, wherein identifying the runtime instance of the target element comprises comparing the similarity measure to a pre-determined threshold and determining whether the runtime instance of the target element comprises the candidate target element according to a result of the comparison.

14. The method of claim 11, wherein the semantic assessor module is configured to employ a pre-trained generative language model (GLM) to determine the similarity measure.

15. The method of claim 14, wherein determining the similarity measure comprises:
employing the GLM to determine a first embedding vector of the design-time target label and a second embedding vector of the candidate label; and
determining the similarity measure according to a distance between the first and second embedding vectors.
